# EUROPÄISCHE PATENTSCHRIFT

(11) **EP 2 516 777 B1**
(45) Veröffentlichungstag und Bekanntmachung des Hinweises auf die Patenterteilung: **18.06.2014**
(21) Anmeldenummer: 10790525.9
(22) Anmeldetag: 06.12.2010
(51) Int. Cl.: E05D 15/34, B60J 5/04

(54) **FAHRZEUGTÜRANORDNUNG**
ARRANGEMENT OF A VEHICLE DOOR
DISPOSITION D'UNE PORTE DE VÉHICULE

(30) Priorität: 24.12.2009 DE 102009060367
(43) Veröffentlichungstag der Anmeldung: 31.10.2012
(73) Patentinhaber: Volkswagen Aktiengesellschaft, 38436 Wolfsburg (DE)
(72) Erfinder: ELLINGHAUS, Thomas, 38108 Braunschweig (DE); HEINISCH, Frank, 38527 Meine (DE)
(86) Internationale Anmeldenummer: PCT/EP2010/007394
(87) Internationale Veröffentlichungsnummer: WO 2011/076335

(56) Entgegenhaltungen:
- CH-A- 318 747
- FR-A1- 2 455 523
- GB-A- 902 405

## Beschreibung

Die Erfindung betrifft eine Fahrzeugtüranordnung mit einer Fahrzeugtür zum Verschließen einer Türöffnung in einer Karosserie eines Fahrzeugs, insbesondere Kraftfahrzeugs, und mit einer Schwenkvorrichtung, die einen das Gewicht der Fahrzeugtür tragenden Tragarm und mindestens einen die Bewegung der Fahrzeugtür, steuernden Führungsarm umfasst, wobei der Tragarm und der Führungsarm die gleiche Länge aufweisen und derart an der Tür und der Karosserie schwenkbar gelagert angeordnet sind, dass sie ein Parallelogramm bilden.

Fahrzeugtüranordnungen der eingangs genannten Art sind aus dem Stand der Technik bekannt. Insbesondere als Alternative zu Schiebetüren werden Fahrzeugtüren mit einer Parallelogrammführung genutzt, um eine Türöffnung freizugeben oder zu verschließen, ohne dabei eine raumgreifende Bewegung auszuführen, wie sie beispielsweise bei üblichen Schwenktüren vorkommt.

So offenbart beispielsweise die Offenlegungsschrift GB 902,405 A eine Fahrzeugtür, bei der ein Tragarm und ein Führungsarm vorgesehen sind, die derart angeordnet sind, dass sie ein Parallelogramm bilden. Dies hat zur Folge, dass die Fahrzeugtür während ihrer Bewegung stets gleich zu der Fahrzeugkarosserie ausgerichtet ist. Dabei ist vorgesehen, dass der Führungsarm an der Unterseite und der Tragarm auf mittlere Höhe der Fahrzeugtür schwenkbar angeordnet ist.

Der Erfindung liegt die Aufgabe zu Grunde, eine Fahrzeugtüranordnung zu schaffen, die zum einen eine stabile Führung auch schwerer Fahrzeugtüren gewährleistet, und zum anderen eine hohe Gestaltungsfreiheit für der Fahrzeugtür ermöglicht.

Die der Erfindung zugrunde liegende Aufgabe wird durch Fahrzeug mit den Merkmalen des Anspruchs 1 gelöst. Das erfindungsgemäße Fahrzeug zeichnet sich dadurch aus, dass der Tragarm auf Höhe eines die Türöffnung nach unten begrenzenden horizontalen Karosserieabschnitts schwenkbar gelagert ist. Eine Türöffnung wird üblicherweise an den Seiten durch vertikale Karosserieabschnitte und oben und unten durch entsprechende horizontale Karosserieabschnitte definiert beziehungsweise gebildet. Natürlich gibt es auch Türen, die beispielsweise mehrere zueinander versetzte horizontale Karosserieabschnitte aufweisen. Jedoch begrenzt dann nur der unterste horizontale Karosserieabschnitt tatsächlich die Türöffnung nach unten. Der Tragarm ist somit in einem Bereich verschwenkbar gelagert, der unterhalb der Türöffnung liegt. Dadurch trägt der Tragarm die Fahrzeugtür entsprechend an ihrem untersten Abschnitt, der in der geschlossenen Stellung in der Regel zum Verdecken des unteren horizontalen Karosserieabschnitts dient. Dies hat mehrere Vorteile. Zum einen wird die Haltekraft für die Fahrzeugtür gezielt von unten in die Fahrzeugtür eingeleitet, wodurch eine eindeutig bestimmte Lagerung der Fahrzeugtür gewährleistet wird. Von unten ausgehend kann die Kraft mit einfachen Maßnahmen gezielt auf die tragenden Konstruktionselemente der Fahrzeugtür übertragen werden. Zum anderen befindet sich der schwenkbare Tragarm nunmehr in einem für eine im Fahrzeug befindliche Person nicht einsehbaren Bereich, sodass die in den Fahrzeuginnenraum weisende Seite beziehungsweise Fläche der Fahrzeugtür vollkommen frei gestaltet werden kann, ohne dass ein in den Fahrzeuginnenraum ragender Schwenkarm sowohl das Design als auch die Ergonomie des Fahrzeugtür stört. Weiterhin lässt sich dadurch der Tragarm optimal in Bezug auf seine Funktion gestalten, da durch seine verdeckte Anordnung eine optisch ansprechende Gestaltung des Tragarms nicht von Bedeutung ist. an Darüber hinaus ist es denkbar, den Tragarm und den horizontalen Karosserieabschnitt derart zu gestalten, dass der Tragarm auf dem horizontalen Karosserieabschnitt zumindest über einen gewissen Verschwenkbereich gestützt und/oder geführt wird, wodurch ein sicheres Schließen der Fahrzeugtür stets gewährleistet werden kann.

Vorteilhafterweise ist der Führungsarm zumindest im Wesentlichen auf der gleichen Höhe wie der Tragarm verschwenkbar gelagert. Hierbei ist also vorgesehen, dass der Führungsarm und der Tragarm ein in einer Ebene liegendes Parallelogramm bilden. Hierdurch wird zum einen die Kinematik des Parallelogramms besonders einfach und stabil dargestellt, wodurch eine genaue Parallelogrammführung gewährleistet wird, und zum anderen liegt auch der Führungsarm außerhalb des Sichtbereichs einer Person im Fahrzeuginnenraum. Sowohl die Außenseite als auch die Innenseite der Fahrzeugtür können frei gestaltet werden.

Weiterhin ist vorgesehen, dass ein karosserieseitiges Ende des Tragarms mit einem Drehgelenk an einem zumindest im Wesentlichen vertikalen Karosserieabschnitt verbunden ist. Während der Tragarm also in Höhe des horizontalen Karosserieabschnitts verschwenkbar gelagert ist, befindet sich das die karosserieseitige Drehachse bildende Drehgelenk an einem zumindest im Wesentlichen vertikalen Karosserieabschnitt. Bevorzugt befindet sich das Drehgelenk an dem in Vorwärts-Fahrtrichtung gesehenen hinteren vertikalen Karosserieabschnitt, sodass sich die Fahrzeugtür, bei der es sich bevorzugt um eine Hintertür des Fahrzeugs handelt, nach hinten verschwenken lässt, um die Türöffnung freizugeben. An dem vertikalen Karosserieabschnitt, beispielsweise an der sogenannten C-Säule, lassen sich besonders hohe Kräfte von dem Tragarm auf die Karosserie übertragen, sodass auch schwere Türen sicher gehalten werden können. Die eindeutige Unterscheidung zwischen Tragarm und Führungsarm hat den Vorteil, dass insgesamt die Schwenkvorrichtung der Fahrzeugtür einfacher ausgelegt und konstruiert werden kann, da dem Tragarm und dem Führungsarm jeweils eindeutige Aufgaben zugeordnet werden, wobei der Tragarm natürlich auch eine Führungsfunktion ausübt. Dies vereinfacht die Konstruktion und erhöht die Sicherheit.

Vorteilhafterweise ist der Führungsarm in seiner Länge und/oder Einbauposition variierbar. Dadurch kann das Parallelogramm beispielsweise an fertigungs- und/oder montagebedingte Toleranzen angepasst werden, so dass stets ein sicheres Verschließen und Öffnen der Fahrzeugtür möglich ist. Da, wie oben beschrieben, der Führungsarm keine hohen Tragkräfte übertragen können muss, ist eine variierbare Länge und/oder Einbauposition des Führungsarms mit einfachen Mitteln bewerkstelligbar.

Vorteilhafterweise ist ein weiterer mit der Fahrzeugtür und der Karosserie verbundener Führungsarm vorgesehen, der auf Höhe eines die Türöffnung nach oben begrenzenden horizontalen Karosserieabschnitts verschwenkbar gelagert ist. Es sind somit drei die Schwenkvorrichtung bildende Schwenkarme vorgesehen, von denen zwei allein der Führung der Fahrzeugtür dienen, wobei der zweite Führungsarm auf der dem ersten Führungsarm gegenüberliegenden Seite der Fahrzeugtür beziehungsweise der Türöffnung angeordnet ist. Durch die Verschwenkbarkeit in Höhe des die Türöffnung nach oben begrenzten Karosserieabschnitts liegt auch der zweite Führungsarm außerhalb des Sichtbereichs, wodurch die Gestaltungsfreiheit bezüglich der Fahrzeugtürinnenseite weiterhin gewährleistet wird. Der weitere Führungsarm stabilisiert die Fahrzeugtür zusätzlich und verhindert insbesondere ein Kippen der Fahrzeugtür von der Karosserie weg.

Ferner ist vorgesehen, dass die Fahrzeugtür eine von dem ersten Drehgelenk, also von dem karosserieseitigen Drehgelenk des Tragarms, ausgehende Querverstrebung aufweist. Die Querverstrebung weist also ihren Ursprung an dem ersten Drehgelenk auf. Über diese Querverstrebung kann die Haltekraft des Tragarms gezielt in die Fahrzeugtür eingeleitet beziehungsweise übertragen werden.

Vorteilhafterweise ist die Querverstrebung zumindest im Wesentlichen V-förmig ausgebildet, wobei die Spitze der Querverstrebung an dem ersten Drehgelenk oder zumindest im Bereich des ersten Drehgelenks liegt, und die Querverstrebung sich nach oben hin aufweitet. Hierzu weist die Querverstrebung zweckmäßigerweise mindestens zwei zueinander geneigte, einen Winkel einschließende Streben auf, die zweckmäßigerweise mit tragenden Elementen der Fahrzeugtür verbunden sind. Die Querverstrebung ist mittels geeigneter Mittel, wie Nieten, Bolzen oder auch durch Verkleben, Verschweißen und/oder Verlöten mit den tragenden Elementen der Fahrzeugtür verbunden.

Zur Versteifung und Stabilisierung der Querverstrebung und damit der Fahrzeugtür und der Fahrzeugtüranordnung ist die Querverstrebung vorteilhafterweise zumindest bereichsweise, insbesondere im Bereich des ersten Drehgelenks, mit einem Verbindungsblech versehen, dass zweckmäßigerweise ebenfallts V-förmig ausgebildet ist. Das Verbindungsblech ist mit den zwei, die Querverstrebung bildenden Streben beispielsweise durch Vernieten; Verschrauben, Verkleben und/oder Verschweißen verbunden, sodass der Zusammenhalt der Streben der Querverstrebung gewährleistet ist.

Ferner ist vorgesehen, dass dem Tragarm wenigstens ein Arretiermittel zum Halten des Tragarms in mindestens einer Offenposition der Fahrzeugtür zugeordnet ist. Das Arretiermittel verhindert, dass sich die Fahrzeugtür beispielsweise aufgrund von Gravitationskraft, ungewollt verschließt. Das Arretiermittel ist vorteilhafterweise mechanisch arbeitend ausgebildet. So kann das Arretiermittel beispielsweise von einer Verrastung, einem Anschlag, durch eine entsprechende Ausrichtung der Drehachsen der unterschiedlichen Drehgelenke; oder auch durch magnetische Hilfsmittel gebildet werden. Die Ausrichtung der Drehachsen ist dabei zweckmäßigerweise derart zu wählen, dass die Fahrzeugtür beim Öffnen einen Scheitelpunkt überwinden muss, hinter dem sie anschließend wieder ein Stück weit nach unten geführt wird. Dadurch muss zunächst auch beim Verschließen dieser Scheitelpunkt überwunden werden.

Schließlich ist vorgesehen, dass die Fahrzeugtür wenigstens ein Schloss, insbesondere Klappschloss, und/oder wenigstens eine automatische Zuziehhilfe aufweist. Vorteilhafterweise wirken das Schloss und/oder die Zuziehhilfe mit einem im Wesentlichen vertikalen Karosserieabschnitt der Türöffnung zusammen, wobei, wenn sowohl Schloss als auch Zuziehhilfe vorgesehen sind, vorteilhafterweise das Schloss an einem vertikalen Karosserieabschnitt und die Zuziehhilfe an dem gegenüberliegenden Horizontalabschnitt ungeordnet werden, um den Bauraum besonders günstig auszunutzen und ein sicheres Verschließen der:Fahrzeugtür zu gewährleisten. Die automatische Zuziehvorrichtung weist vorteilhafterweise einen elektromotorischen Aktor auf und unterstützt damit die Schließbewegung der Fahrzeugtür.

Im Folgenden soll die Erfindung anhand der beispielhaften Zeichnung näher erläutert werden. Dazu zeigen
- Figur 1: eine vorteilhafte Fahrzeugtüranordnung in einer perspektivischen Darstellung,
- Figur 2: eine Schwenkvorrichtung der Fahrzeugtüranordnung,
- Figur 3: eine Fahrzeugtür der Fahrzeugtüranordnung in einer Draufsicht und
- Figuren 4A und 4B: Verschließmechanismen für die Fahrzeugtür.

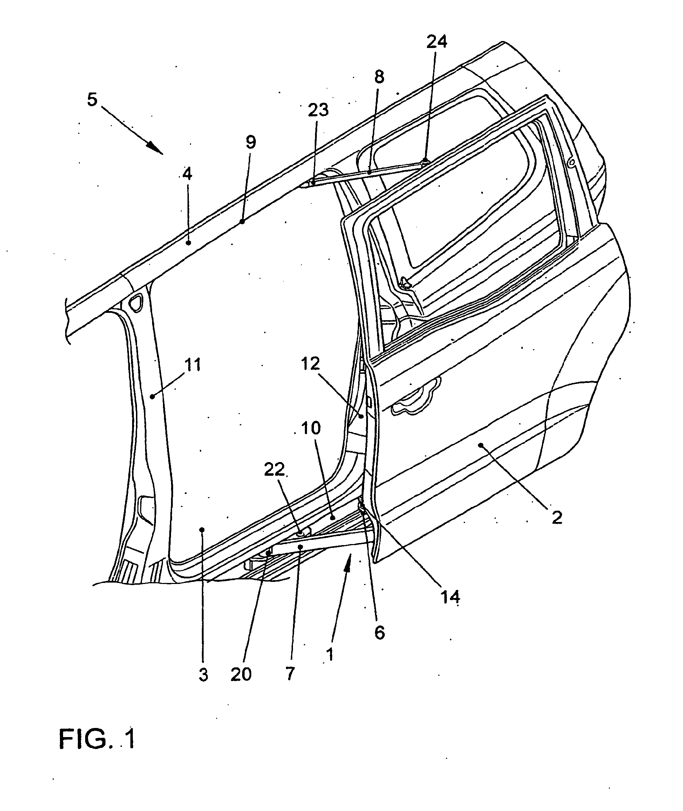

Die Figur 1 zeigt in einer perspektivischen Darstellung eine bevorzugte Äusführungsform einer Schwenkvorrichtung 1 einer Fahrzeugtür 2 zum Verschließen einer Türöffnung 3, die in einer Karosserie 4 eines hier nicht näher dargestellten Fahrzeugs, insbesondere Kraftfahrzeugs, ausgebildet ist. Die Schwenkvorrichtung 1, Fahrzeugtür 2 und Karosserie 4 bilden dabei eine vorteilhafte Fahrzeugtüranordnung 5. Vorliegend handelt es sich bei der Türöffnung 3 um die Türöffnung einer zweiten und/oder dritten Sitzreihe des Fahrzeugs.

Die Schwenkvorrichtung 1 der Fahrzeugtüranordriung 5 umfasst einen Tragarm 6, der das Gewicht der Fahrzeugtür 2 an der Karosserie 4 trägt, sowie einen Führungsarm 7 und einen Führungsarm 8, die zusammen mit dem Tragarm 6 die Bewegung der Fahrzeugtür steuern. Der Tragarm 6 sowie die Führungsarme 7,8 weisen jeweils die gleiche Länge auf und sind derart an der Karosserie 4 und an der Fahrzeugtür 2 schwenkbar gelagert an geordnet, dass sie ein Parallelogramm bilden. Der Tragarm 6 sowie die Führungsarme 7 und 8 sind vorteilhafterweise jeweils als Hohlprofil ausgebildet.

Die Türöffnung 3 wird nach oben und nach unten von jeweils einem im Wesentlichen horizontal verlaufenden Karosserieabschnitt 9 beziehungsweise 10 und an den Seiten durch jeweils einen im Weseritlichen vertikal verlaufenden Karosserieabschnitt 11 beziehungsweise 12 begrenzt.

Der Tragarm 6 und der Führungsarm 7 sind auf Höhe des die Türöffnung 3 nach unten begrenzenden horizontalen Karosserieabschnitts 10 verschwenkbar gelagert. Dadurch liegen der Führungsarm 7 und der Tragarm 6 außerhalb des Sichtbereichs einer in dem Fahrzeug befindlichen Person, so dass die Innenseite der Fahrzeugtür 2 frei gestaltbar ist und nicht durch das Vorhandensein eines in den Fahrzeuginnenraum hineinragenden Tragarms gestört wird. Dadurch lässt sich zum einen das Design und zum anderen die Ergonomie, insbesondere in Hinblick auf Armauflagen an der Fahrzeugtürinnenseite, optimal gestatten. Durch die verschwenkbare Anordnung des Tragarms 6 auf Höhe des Karosserieabschnitts 10 lassen sich darüber hinaus die Tragekräfte besonders günstig in die Fahrzeugtür 2 einleiten, da der Tragarm 6 entsprechend am unteren Randbereich der Fahrzeugtür 2 angreift. Die Fahrzeugtür 2 liegt also mit ihrem Gewicht auf den Tragarm 6. Da somit eine eindeutige Lastverteilung gewährleistet ist, lassen sich der Tragarm 6 und die Führungsarme 7 und 8 konstruktiv eindeutig gestalten. Die Führungsarme 7 und 8 müssen lediglich derart dimensioniert werden, dass sie die Führungskräfte für die Fahrzeugtür 2 aufnehmen beziehungsweise übertragen können. Der Tragarm kann in Bezug auf seine Funktion optimal ausgelegt werden.

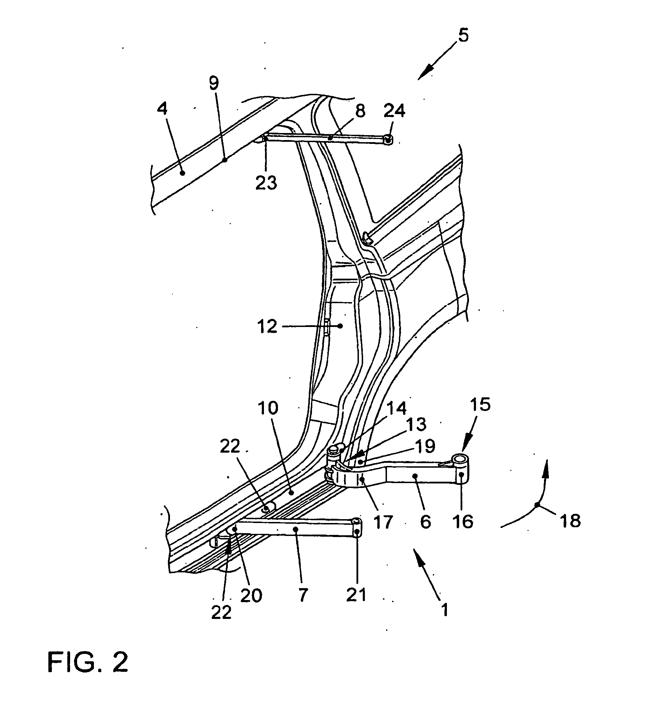

Die Figur 2 zeigt in einer vergrößerten Darstellung die Schwenkvorrichtung 1 ohne die Fahrzeugtür 2. Hierbei ist deutlich zu erkennen, dass ein karosserieseitiges Ende 13 des Tragarms 6 mit einem ersten Drehgelenk 14 verbunden ist, das an dem vertikalen Karosserieabschnitt 12 angeordnet ist. Durch die schwenkbare Anordnung des Tragarms 6 auf Höhe des horizontalen Karosserieabschnitts 10 liegt somit das Drehgelenk 14 dort, wo der horizontale Karosserieabschnitt 10 und der vertikale Karosserieabschnitt 12 aufeinandertreffen. Hier können besonders große Kräfte aufgrund der hohen Stabilität und Festigkeit überragen werden. An seinem fahrzeugtürseitigen Ende 15 ist der Tragarm 6 mit einem Drehgelenk 16 verbunden, von dem nur eine Gelenkhülse des Tragarms 6 dargestellt ist, die an der Innenseite der Fahrzeugtür 2 angeordnet ist. Eine Krümmung 17 in dem Tragarm 6 nahe zu dem Drehgelenk 14 erlaubt ein weites Zurückschwenken des Tragarms 6 in Richtung eines Pfeils 18. Die Krümmung 17 ist derart gestaltet, dass ein vorstehender Karosseriebereich 19 der Karosserie 4 im aufgeschwungenen Zustand des Tragarms 6 umgangen wird. Hierdurch lässt sich der Schwenkwinkel des Tragarms 6 entsprechend vergrößern.

Der Führungsarm 7 ist karosserieseitig an einem Drehgelenk 20 und fahrzeugtürseitig mittels eines Drehgelenks 21 schwenkbar gelagert. Vorliegend kann der Führurigsarm 7 in seiner karosserieseitigen Einbauposition variiert werden. Hierzu sind karosserieseitig zwei oder mehr Aufnahmen 22 für das Drehgelenk 20 vorgesehen. Hierdurch lassen sich beispielsweise Fertigungs- und/oder Montagetoleranzen kompensieren und/oder die Schwenkvorrichtung 1 an unterschiedliche Fahrzeugtüren 2 anpassen.

Der weitere Führungsarm 8 ist karosserieseitig mit einem Drehgelenk 23 und fahrzeugtürseitig mit einem Drehgelenk 24 mit der Karosserie 4 beziehungsweise der Fahrzeugtür 2 verbunden. Das Drehgelenk 23 ist dabei vorliegend an den die Türöffnung 3 nach oben begrenzende horizontalen Karosserieabschnitt 9 angeordnet, sodass der Führungsarm 8 ebenfalls außerhalb des Sichtbereichs einer in dem Fahrzeug 5 befindlichen Person liegt. Prinzipiell ist es aber auch denkbar, die Schwenkvorrichtung 1 ohne den Führungsarm 8 auszubilden.

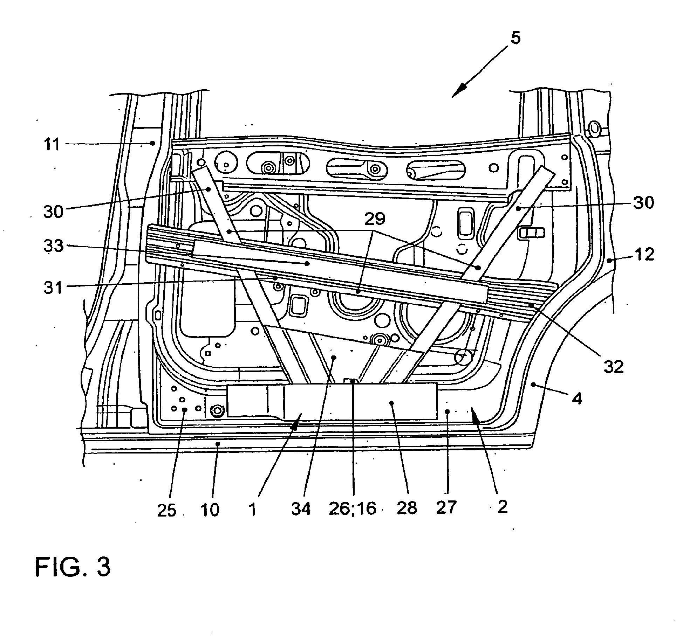

Die Figur 3 zeigt eine Draufsicht auf im Wesentlichen die untere Hälfte der Fahrzeugtür 2 ohne deren Außenverkleidung. Dargestellt sind die tragenden Bestandteile der Fahrzeugtür 2, die insbesondere von einem Rahmen 25 auf die herkömmliche Art und Weise gebildet werden. Ein Bolzen 26, der zusammen mit der fahrzeugseitigen Hülse des Tragarms 6 das Drehgelenk 16 bildet, ist an einem die Fahrzeugtür 2 nach unten begrenzenden horizontalen Abschnitt 27 angeordnet, sodass die Haltekraft über den Tragarm 6 von unten in die Fahrzeugtür 2, wie oben bereits gesagt, eingeleitet wird. Der Bolzen beziehungsweise das Drehgelenk 16 ist horizontal mittig an dem Rahmen 25 angeordnet. Vorliegend entspricht dies dem entsprechenden horizontalen Schwerpunkt der Fahrzeugtür 2. Der Abschnitt 27 liegt im geschlossenen Zustand der Fahrzeugtür 2 gegenüber des horizontalen Karosserieabschnitts 10. Der Karosserieabschnitt 27, auch Schweller genannt, weist vorliegend eine Verstärkung in Form eines zusätzlichen Blechelements 28 auf.

Von dem Drehgelenk 16 geht eine Querverstrebung 29 aus, die im Wesentlichen V-förmig ausgebildet ist. Dazu weist die Querverstrebung 29 zwei Streben 30 auf, die sich von dem Drehgelenk 16 ausgehend aufweiten beziehungsweise voneinander entfernen. Auf etwa halber Höhe ist eine weitere Strebe 31 angeordnet, die die Streben 30 miteinander verbindet. Die Streben 30 kreuzen dabei einen Aufprallträger 32, der sich zwischen den vertikalen Fahrzeugtürabschnitten beziehungsweise Abschnitten des Rahmens 25 erstreckt. Die Streben 30 können in Blickrichtung hinter oder vor dem Aufprallträger 32, verlaufen und gegebenenfalls mit diesem verbunden werden. Durch eine entsprechende Ausbildung des Aufprallträgers 32 können die Streben 30 auch durch den Aufprallträger 32, wie dargestellt, hindurchführen. Die Strebe 31 gibt der Querverstrebung 29 letztendlich die Form des Großbuchstabens A, der auf dem Kopf steht beziehungsweise dessen Spitze dem Drehgelenk 16 zugeordnet ist. Die Streben 30,31 können miteinander und/oder mit der Fahrzeugtür beziehungsweise deren Bestandteile verschraubt, verschweißt, vernietet, verklebt und/oder verklemmt sein. Die Querverstrebung 29 leitet die Tragkraft von dem Drehgelenk 16 gezielt in die Fahrzeugtür 2 ein, um einen stabilen Halt der Fahrzeugtür 2 zu gewährleisten. Vorliegend sind weiterhin Deckbleche 33 auf dem Aufprallträger 32 angeordnet, die die Konstruktion weiter stabilisieren

Weiterhin ist im untere Bereich der Querverstrebung 29, also nahe zu dem Drehgelenk 16, ein Verbindungsblech 34 vorgesehen, das mit den Streben 30 und gegebenenfalls mit dem Drehgelenk 16 verbunden ist, um insbesondere die Querverstrebung 29 zu stützen.

Insgesamt wird somit eine Fahrzeugtüranordnung 6 geboten, die auf einfache und kostengünstige Art und Weise einen stabilen Halt sowie eine sichere Führung der Fahrzeugtür 2 gewährleistet. Aufgrund des Parallelogramms ist die Fahrzeugtür 2 während ihrer Bewegung stets im Wesentlichen parallel zur Karosserie 4 ausgerichtet. Insofern entspricht der Bewegungsweg der Fahrzeugtür 2 im Wesentlichen dem einer Schiebetür. Zweckmäßigerweise ist die Schwenkvorrichtung 1 derart ausgebildet, dass sich hierbei ein Schwenkwinkel von 120° bis 170°, insbesondere von 150° verwirklichen lässt.

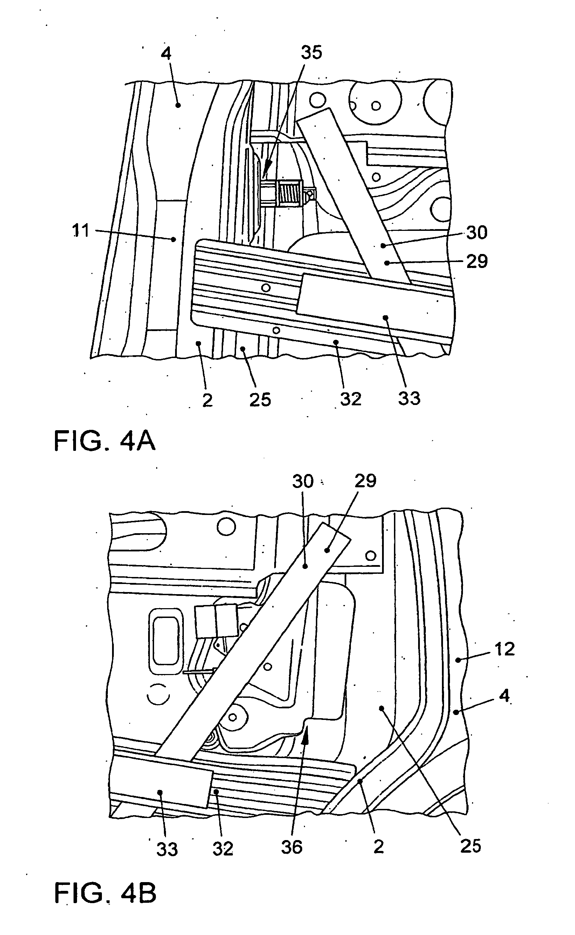

Die Figuren 4A und 4B zeigen Verschließmechanismen für die Fahrzeugtüranordnung 5, die ein vorteilhaftes Verschließen der Fahrzeugtür 2 an der Karosserie 4 ermöglichen. Die Figur 4A zeigt hierzu an dem vorderen vertikalen Abschnitt des Rahmens 25 der Fahrzeugtür 2 ein sogenanntes Klappschloss 35, das mit einer entsprechenden Schließmechanik an dem horizontalen Karosserieabschnitt 11 zusammenwirken kann.

Die Figur 4B zeigt den hinteren vertikalen Karosserieabschnitt 12 sowie den darin einliegenden vertikalen Karosserieabschnitt des Rahmens 25 der Fahrzeugtür 2. An.dem Rahmen 25 ist dabei eine automatische Zuziehvorrichtung 36 angeordnet, die die Fahrzeugtür 2 automatisch in die Türöffnung 3 hineinzieht und darin verschließt, sobald sich die Fahrzeugtür 2 ausreichend weit in der Türöffnung 3 befindet. Vorteilhafterweise weist die Zuziehvorrichtung 36 hierzu einen elektromotorischen Aktor auf. Die Zuziehvorrichtung 36 wirkt dabei als zweites Schloss der Fahrzeugtüranordnung 5. Im Betrieb kann somit mittels der automatischen Zuziehhilfe 36 stets ein sicheres Verschließen der Fahrzeugtür 2 in der Türöffnung 3 beziehungsweise der Karosserie 4 gewährleistet werden. Mittels des Klappschloss 35 kann ein Öffnungs- oder Schließvorgang eingeleitet werden. Optional kann der oben beschriebene Verschließmechanismus jedoch auch ohne die Zuziehvorrichtung 36 realisiert werden.

## Patentansprüche

1. Fahrzeug, insbesondere Kraftfahrzeug, mit einer Karosserie (4) und einer Fahrzeugtür (2) zum Verschließen einer Türöffnung (3) in der Karosserie (4) des Fahrzeugsund mit einer Schwenkvorrichtung (1), die einen das Gewicht der Fahrzeugtür (2) tragenden Tragarm (6) und mindestens einen die Bewegung der Fahrzeugtür steuernden Führungsarm (7,8) umfasst, wobei der Tragarm (6) und der Führungsarm (7,8) die gleiche Länge aufweisen und derart an der Fahrzeugtür (2) und der Karosserie (4) schwenkbar gelagert angeordnet sind, dass sie ein Parallelogramm bilden, **dadurch gekennzeichnet, dass** der Tragarm (6) auf Höhe eines die Türöffnung (3) nach unten begrenzenden horizontalen Karosserieabschnitts (10) schwenkbar gelagert ist.

2. Fahrzeug nach Anspruch 1, **dadurch gekennzeichnet, dass** der Führungsarm (7) zumindest im Wesentlichen auf der gleichen Höhe wie der Tragarm (6) verschwenkbar gelagert ist.

3. Fahrzeug nach einem der vorhergehenden Ansprüche, **dadurch gekennzeichnet, dass** ein karosserieseitiges Ende (13) des Tragarms (6) mit einem ersten Drehgelenk (14) an einem zumindest im Wesentlichen vertikal verlaufenden Karosserieabschnitt (12) verbunden ist.

4. Fahrzeug nach einem der vorhergehenden Ansprüche, **dadurch gekennzeichnet, dass** der Führungsarm (7,8) in seiner Länge und/oder Einbauposition variierbar ist.

5. Fahrzeug nach einem der vorhergehenden Ansprüche, **gekennzeichnet durch** einen weiteren mit der Fahrzeugtür (2) und der Karosserie (4) verbundenen Führungsarm (8), der auf Höhe eines die Türöffnung (3) nach oben begrenzenden horizontalen Karosserieabschnitts (9) verschwenkbar gelagert ist.

6. Fahrzeug nach einem der vorhergehenden Ansprüche, **dadurch gekennzeichnet, dass** die Fahrzeugtür (2) eine von dem zweiten Drehgelenk (16) ausgehende Querverstrebung (29) aufweist.

7. Fahrzeug nach Anspruch 6, **dadurch gekennzeichnet, dass** die Querverstrebung (29) zumindest im Wesentlichen V-förmig ausgebildet ist.

8. Fahrzeug nach einem der vorhergehenden Ansprüche 6 oder 7, **dadurch gekennzeichnet, dass** die Querverstrebung (2) zumindest bereichsweise, insbesondere im Bereich des zweiten Drehgelenks (16) mit einem Verbindungsblech (34) versehen ist.

9. Fahrzeug nach einem der vorhergehenden Ansprüche, **dadurch gekennzeichnet, dass** dem Tragarm (6) wenigstens ein Arretiermittel zum Halten des Tragarms (6) in einer Offenposition der Fahrzeugtür (2) zugeordnet ist.

10. Fahrzeug nach einem der vorhergehenden Ansprüche, **dadurch gekennzeichnet, dass** die Fahrzeugtür (2) wenigstens ein Schloss, insbesondere Kappschloss (35), und/oder wenigstens eine automatische Zuziehvorrichtung (36) aufweist.

## Claims

1. Vehicle, in particular motor vehicle, having a body (4) and a vehicle door (2) for closing a door opening (3) in the body (4) of the vehicle, and having a pivoting device (1) which comprises a carrying arm (6), which carries the weight of the vehicle door (2), and at least one guide arm (7, 8), which controls the movement of the vehicle door, wherein the carrying arm (6) and the guide arm (7, 8) are of the same length and are mounted in a pivotable manner on the vehicle door (2) and the body (4) so as to form a parallelogram, **characterized in that** the carrying arm (6) is mounted in a pivotable manner level with a horizontal body portion (10) which bounds the door opening (3) in the downward direction.

2. Vehicle according to Claim 1, **characterized in that** the guide arm (7) is mounted in a pivotable manner at least essentially at the same height as the carrying arm (6).

3. Vehicle according to one of the preceding claims, **characterized in that** a body end (13) of the carrying arm (6) is connected to a first rotary articulation (14) on an at least essentially vertically running body portion (12).

4. Vehicle according to one of the preceding claims, **characterized in that** it is possible to vary the length and/or installation position of the guide arm (7, 8).

5. Vehicle according to one of the preceding claims, **characterized by** a further guide arm (8), which is connected to the vehicle door (2) and the body (4) and is mounted in a pivotable manner level with a horizontal body portion (9) which bounds the door opening (3) in the upward direction.

6. Vehicle according to one of the preceding claims, **characterized in that** the vehicle door (2) has a transverse strut arrangement (29) extending from the second rotary articulation (16).

7. Vehicle according to Claim 6, **characterized in that** the transverse strut arrangement (29) is of at least essentially V-shaped design.

8. Vehicle according to either of preceding Claims 6 and 7, **characterized in that** the transverse strut arrangement (29) is provided, at least in certain regions, in particular in the region of the second rotary articulation (16), with a metal connecting plate (34).

9. Vehicle according to one of the preceding claims, **characterized in that** the carrying arm (6) is assigned at least one arresting means for retaining the carrying arm (6) in an open position of the vehicle door (2).

10. Vehicle according to one of the preceding claims, **characterized in that** the vehicle door (2) has at least one lock, in particular hinged lock (35), and/or at least one automatic pull-shut device (36).

## Revendications

1. Véhicule, notamment véhicule automobile, avec une carrosserie (4) et une porte de véhicule (2) permettant de fermer une ouverture de porte (3) pratiquée dans la carrosserie (4) du véhicule et avec un dispositif pivotant (1) comprenant un bras de support (6) supportant le poids de la porte de véhicule (2) et au moins un bras de guidage (7, 8) commandant le mouvement de la porte de véhicule, le bras de support (6) et le bras de guidage (7, 8) présentant la même longueur et étant disposés de façon à pouvoir pivoter de telle sorte au niveau de la porte de véhicule (2) et de la carrosserie (4) qu'ils forment un parallélogramme, **caractérisé en ce que** le bras de support (6) est disposé de façon à pouvoir pivoter à la hauteur d'une section de carrosserie (10) horizontale délimitant l'ouverture de porte (3) vers le bas.

2. Véhicule selon la revendication 1, **caractérisé en ce que** le bras de guidage (7) est disposé de façon à pouvoir pivoter au moins pour l'essentiel à même hauteur que le bras de support (6).

3. Véhicule selon l'une quelconque des revendications précédentes, **caractérisé en ce qu'**une extrémité (13) située du côté de carrosserie du bras de support (6) est reliée à une première articulation pivotante (14) au niveau d'une section de carrosserie (12) s'étendant au moins pour l'essentiel verticalement.

4. Véhicule selon l'une quelconque des revendications précédentes, **caractérisé en ce que** le bras de guidage (7, 8) peut varier dans sa longueur et/ou sa position de montage.

5. Véhicule selon l'une quelconque des revendications précédentes, **caractérisé par** la présence d'un bras de guidage (8) supplémentaire relié à la porte de véhicule (2) et à la carrosserie (4) et disposé de façon à pouvoir pivoter à hauteur d'une section de carrosserie (9) horizontale délimitant vers le haut l'ouverture de porte (3).

6. Véhicule selon l'une quelconque des revendications précédentes, **caractérisé en ce que** la porte de véhicule (2) comporte une entretoise transversale (29) partant de la deuxième articulation pivotante (16).

7. Véhicule selon la revendication 6, **caractérisé en ce que** l'entretoise transversale (29) prend au moins pour l'essentiel une forme de V.

8. Véhicule selon l'une quelconque des revendications 6 ou 7, **caractérisé en ce que** l'entretoise transversale (29) est pourvue au moins en partie, notamment dans la région de la deuxième articulation pivotante (16), d'une tôle de jonction (34).

9. Véhicule selon l'une quelconque des revendications précédentes, **caractérisé en ce qu'**au moins un moyen d'arrêt est associé au bras de support (6) pour maintenir le bras de support (6) dans une position ouverte de la porte de véhicule (2).

10. Véhicule selon l'une quelconque des revendications précédentes, **caractérisé en ce que** la porte de véhicule (2) comporte au moins une serrure, notamment une serrure rabattable (35) et/ou au moins un dispositif contractable (36) automatique.
